# EUROPÄISCHE PATENTSCHRIFT

(11) **EP 3 541 598 B1**
(45) Veröffentlichungstag und Bekanntmachung des Hinweises auf die Patenterteilung: **16.07.2025**
(21) Anmeldenummer: 17781401.9
(22) Anmeldetag: 14.09.2017
(51) Int. Cl.: B29C 48/13, B29C 48/154, B29C 48/92, B29C 43/22, B29C 48/09, B29C 48/06, B29C 48/30, H01B 13/24, H02G 1/14, H02G 3/04, H01B 7/18

(54) **VERFAHREN SOWIE VORRICHTUNG ZUR HERSTELLUNG EINES STRANGGUTS**
METHOD AND DEVICE FOR PRODUCING AN EXTRUDATE
PROCÉDÉ ET DISPOSITIF POUR FABRIQUER UN PRODUIT FILIFORME

(30) Priorität: 16.11.2016 DE 102016222542
(43) Veröffentlichungstag der Anmeldung: 25.09.2019
(73) Patentinhaber: LEONI Kabel GmbH, 91154 Roth (DE)
(72) Erfinder: GOSS, Sebastian, 91154 Roth (DE); SCHREIBER, Andreas, 91154 Roth (DE); WENZEL, Jörg, 91154 Roth (DE); ERNST, Christian, 91781 Weissenburg (DE)
(74) Vertreter: FDST Patentanwälte
(86) Internationale Anmeldenummer: PCT/EP2017/073112
(87) Internationale Veröffentlichungsnummer: WO 2018/091166

(56) Entgegenhaltungen:
- EP-A1- 0 005 104
- EP-A1- 3 297 805
- WO-A1-2016/188900
- DE-A1- 19 845 321
- GB-A- 971 021
- JP-A- 2014 218 028
- US-A- 3 751 541
- US-A- 3 881 851
- US-A1- 2015 217 708
- US-B1- 6 719 942

## Beschreibung

Die Erfindung betrifft ein Verfahren sowie eine Vorrichtung zur Herstellung eines Strangguts.

Als Stranggut werden vorliegend gestreckte Bauteile bezeichnet, welche mittels eines Extrusionsverfahrens insbesondere als Endlosware hergestellt werden. Als Stranggut werden vorliegend insbesondere (elektrische) Kabel sowie auch Schläuche verstanden. In beiden Fällen weist das Stranggut einen (Außen-) Mantel auf, welcher durch das erwähnte Extrusionsverfahren ausgebildet ist.

Das Stranggut weist allgemein eine Seele auf, auf die der Mantel aufgebracht ist. Im Falle eines Schlauches weist die Seele beispielsweise einen Hohlraum auf. Im Falle eines Kabels ist die Seele eine Kabelseele mit zumindest einer elektrischen Leitung. Je nach Kabeltyp kann die Kabelseele unterschiedlichste Aufbauten aufweisen. Am Kabel werden häufig Formteile angebracht, wie beispielsweise Steckergehäuse, Tüllen, Dichtungen oder Kombinationen hiervon.

Schläuche sind üblicherweise mehrlagig ausgebildet, die äußerste Lage bildet den beschriebenen Mantel. Dieser wird daher auf eine Schlauchseele, bestehend aus einem mehrlagigen Aufbau, aufgebracht. Die Schlauchseele ist typischerweise hohl. Ein derartiger Schlauch wird beispielsweise auch zur Führung von elektrischen Kabeln oder Leitungen innerhalb des Hohlraums verwendet oder auch zur Führung von Fluid. Auch beim Schlauch werden am Mantel Formteile angebracht, beispielsweise in einem Anschlussbereich.

Aus der nachveröffentlichten PCT/EP 2016/061426 der Anmelderin ist ein Verfahren zur Herstellung eines derartigen Strangguts zu entnehmen, bei dem mithilfe einer Formeinheit unmittelbar nachfolgend zu einer Extrusionseinheit ein jeweiliges Formelement aus dem noch formbaren Material des Mantels ausgebildet wird. Hierzu ist vorgesehen, dass die Formeinheit, die zwei als Formnester ausgebildeter Formhälften aufweist, in radialer Richtung zugestellt wird und dass anschließend quasi durch Abschaben eines Teils des Mantelmaterials das Material aufgestaut wird, so dass die Formnester mit dem Material zur Ausbildung des Formteils gefüllt werden.

Im Hinblick auf ein kontinuierliches Verfahren sind rundlaufende Konzepte vorgesehen, bei denen die Formnester beispielsweise auf einer Scheibe oder auch mittels eines umlaufenden Bandes umlaufend verfahren werden.

Aus der US 2015/0217708 A1 ist eine rundlaufendes Konzept zu entnehmen, bei dem zur Herstellung eines Wellrohres für eine Kabelumhüllung eine Vielzahl von einzelnen Formblöcken an einem umlaufenden Band aneinander aufgereiht sind. Die Geschwindigkeit des Bandes kann dabei variiert werden, je nachdem ob Bereiche mit mehr oder mit weniger Material ausgebildet werden sollen.

Auch aus der DE 198 45 321 A1 ist ein rundlaufendes Konzept zu entnehmen, bei denen jedoch zur Formgebung Unterdruckelemente vorgesehen sind.

Weitere Beispiele für rundlaufende Konzepte speziell zur Ausbildung von Wellrohren sind beispielsweise aus der JP 2014 218028 A oder der US 3 881 851 A zu entnehmen.

Allgemein hat sich gezeigt, dass aufgrund des Aufstauens des Materials während des Formgebungsprozesses ein erheblicher Druck ausgeübt wird, wodurch die Gefahr besteht, dass die einzelnen Formhälften auseinander gedrückt werden. Um dieses Problem zu lösen könnte beispielsweise eine Gegendruck-Vorrichtung, speziell eine Gegendruck-Platte ausgebildet und angeordnet werden, welche während des Formgebungsprozesses einen (zusätzlichen) Gegendruck in Richtung zum Stranggut auf die Formeinheit ausübt, um diese prozesssicher an der gewünschten Relativposition zum Stranggut während des Formgebungsprozesses zu halten.

Allgemein besteht die Bestrebung, einen derartigen Formgebungsprozess für die Ausbildung von Formteilen in einen herkömmlichen Extrusionsprozess mit den üblichen Extrusionsgeschwindigkeiten zu integrieren, um eine übliche Liniengeschwindigkeit bei der Herstellung des Strangguts zu ermöglichen.

Ausgehend hiervon liegt der Erfindung die Aufgabe zugrunde, die Ausbildung eines Strangguts mit einem angeformten Formteil prozesssicher und mit hoher Geschwindigkeit zu ermöglichen.

Die Aufgabe wird gemäß der Erfindung gelöst durch ein Verfahren mit den Merkmalen des Anspruchs 1 sowie durch eine Vorrichtung mit den Merkmalen des Anspruchs 14. Bevorzugte Ausgestaltungen sind in den Unteransprüchen niedergelegt. Die im Hinblick auf das Verfahren angeführten Vorteile und bevorzugten Ausgestaltungen sind sinngemäß auch auf die Vorrichtung zu übertragen.

Das Verfahren dient zur Herstellung eines Strangguts, speziell ein Kabel oder auch ein Schlauch, welches einen Mantel aufweist, der mittels einer Extrusionseinheit mit einer vorgegebenen Wandstärke extrudiert wird. In einer Förder- oder Extrusionsrichtung nachfolgend zur Extrusionseinheit wird dann ein Teil des noch formbaren Materials mithilfe einer Formeinheit während eines Formgebungsprozesses angestaut, sodass sich am Mantel einstückig ein Formteil ausbildet. Die Formeinheit wird hierbei gemäß einem vorgegebenen Arbeitszyklus bewegt, welcher folgende Schritte umfasst: Die Formeinheit wird zunächst aus einer Ausgangsposition in Förderrichtung beschleunigt und quasi auf eine Liniengeschwindigkeit, mit der der Mantel extrudiert wird, aufsynchronisiert. Die Formeinheit hat an der Ausgangsposition typischerweise die Geschwindigkeit null. Anschließend wird die Formeinheit in Richtung zum Stranggut zugestellt. Hierunter wird allgemein verstanden, dass die Formeinheit derart zugestellt wird, dass sie in das noch formbare Material des Mantels eingreift, sodass das gewünschte Anstauen des Materials und speziell das Ausbilden des Formteils erfolgt. Während des Formgebungsprozesses befindet sich daher die Formeinheit in zugestelltem Zustand. Nach dem Formgebungsprozess wird die Formeinheit wieder vom Stranggut zurückgefahren, sodass die Formeinheit also nicht mehr in Eingriff mit dem Mantel ist. Schließlich wird die Formeinheit abgebremst und aus einer Endposition entgegen der Förderrichtung wieder zurück in Richtung zur Ausgangsposition verfahren.

Der Verfahrenszyklus oder Arbeitszyklus ist daher gekennzeichnet durch eine Abfolge von positiven und negativen Beschleunigungen der Formeinheit, um diese periodisch wiederkehrend zwischen der Ausgangsposition und der Endposition hin und her zu verfahren. In einem Geschwindigkeits-Zeit-Diagramm wäre daher insbesondere die Summe aller Flächen oberhalb und unterhalb einer Linie der Geschwindigkeit null, welche jeweils ein Maß für den zurückgelegten Weg angeben, null.

Die Formeinheit wird hierbei zweckdienlicherweise linear entlang einer Linearführung zwischen der Ausgangsposition und der Endposition verfahren. Insgesamt hat sich gezeigt, dass eine derartige Ausgestaltung mit dem Verfahren der Formeinheit entlang eines linearen Verfahrweges in und entgegen der Fördervorrichtung zur Ausbildung einer periodisch wiederkehrenden Arbeitsstrecke sich prozesstechnisch besonders einfach umsetzen lässt, um die gewünschten hohen Prozessgeschwindigkeiten erreichen zu können und insbesondere auch um eine ausreichend robuste Vorrichtung ausbilden zu können, die speziell die hohen Gegendrücke beim Formgebungsprozess standhalten kann. Speziell durch die Ausbildung der Linearführung lassen sich die Kräfte zuverlässig aufnehmen. Neben den Drücken beim Formgebungsprozess betrifft dies insbesondere auch die dynamischen Belastungen aufgrund der hohen Prozessgeschwindigkeiten und der deshalb erforderlichen hohen Beschleunigungen für die Formeinheit.

Bei dem Arbeitszyklus ist vorgesehen, dass die Formeinheit während des Formgebungsprozesses mit einer von der Liniengeschwindigkeit verschiedenen Form-Geschwindigkeit verfahren wird. Diese ist dabei wahlweise höher oder auch niedriger als die Liniengeschwindigkeit, sodass also eine Relativgeschwindigkeit zwischen der Formeinheit und dem Stranggut eingestellt ist, wodurch das gewünschte Anstauen innerhalb der Formeinheit erfolgt.

Die Liniengeschwindigkeit liegt dabei vorzugsweise im Bereich zwischen 0,1 m/s oder 0,5 m/s bis 4 m/s und insbesondere bei etwa 2 m/s.

In bevorzugter Ausgestaltung wird ausgehend von der Ausgangsposition die Formeinheit zunächst auf die Liniengeschwindigkeit beschleunigt, sodass die Relativgeschwindigkeit zunächst also null ist. Anschließend erfolgt die Zustellung der Formeinheit in Richtung zum Stranggut, wodurch ein insbesondere senkrecht zur Förderrichtung orientiertes Einfahren gewährleistet ist und sich insbesondere definierte Flächen für das auszubildende Formteil ausbilden lassen. Nach der Zustellung der Formeinheit, also nach deren zumindest teilweisem Einfahren in das Material des Mantels, wird die Formeinheit beschleunigt und auf die Form-Geschwindigkeit gebracht. Unter Beschleunigung wird vorliegend allgemein entweder eine positive Beschleunigung oder auch eine negative Beschleunigung (Abbremsen) verstanden. Das Überführen auf die Form-Geschwindigkeit erfolgt dabei vorzugsweise mit einer maximalen Beschleunigung.

Die Form-Geschwindigkeit weist dabei eine Differenz zur Liniengeschwindigkeit auf, wobei die Differenz im Bereich von 0,01 m/s bis zu 0,3 m/s und insbesondere 0,05 m/s bis zu 0,2 m/s liegt. Die Differenz beträgt vorzugsweise etwa 5 bis 20% und insbesondere etwa 10% der Liniengeschwindigkeit.

Gemäß einer ersten Ausführungsvariante ist die Form-Geschwindigkeit während des Formgebungsprozesses konstant. Bei einer alternativen Ausgestaltung variiert die Form-Geschwindigkeit während des Formgebungsprozesses. Hierbei ist beispielsweise eine kontinuierliche Zu- oder Abnahme der Form-Geschwindigkeit vorgesehen. Speziell ist dabei auch vorgesehen, dass die Form-Geschwindigkeit derart verändert wird, dass sie in einem ersten Teilabschnitt höher und in einem zweiten Teilabschnitt geringer als die Liniengeschwindigkeit ist. Hierdurch wird daher einmal ein Aufstauen in bzw. entgegen der Förderrichtung ermöglicht. Allgemein lassen sich daher durch Einstellung der Form-Geschwindigkeit insbesondere in Kombination mit der Geometrie der Formeinheit unterschiedliche Profile und Formen der auszubildenden Formteile einstellen.

Nach dem Formgebungsprozess wird die Formeinheit wieder von dem Stranggut zurückgestellt. Dieser Prozess wird nachfolgend auch als Entformen bezeichnet. Für diesen Entformungsvorgang ist zweckdienlicherweise vorgesehen, dass zuvor die Formeinheit aus der Form-Geschwindigkeit auf eine Entformungs-Geschwindigkeit gebracht wird. Allgemein wird dadurch also die Formeinheit relativ zum Formteil zumindest ein Stück weit in oder entgegen der Förderrichtung verfahren weggefahren, bevor die Entformung erfolgt. Zweckdienlicherweise ist dabei die Entformungs-Geschwindigkeit wieder die Liniengeschwindigkeit, sodass also die Relativgeschwindigkeit zwischen Formeinheit und Stranggut wieder null ist. Bei dieser Variante ist beispielsweise eine exakte 90°-Entformung ermöglicht. Grundsätzlich können jedoch auch andere Entformungsgeschwindigkeiten vorgesehen sein, sodass sich beispielsweise auch spezielle Entformungs-Konturen ausbilden lassen.

Gemäß einer ersten bevorzugten Ausgestaltung sind die Ausgangs- und/oder Endposition über mehrere Arbeitszyklen und vorzugsweise über alle Arbeitszyklen identisch. Insbesondere sind sowohl Ausgangs- und Endposition identisch. Dies bedeutet, dass die Formeinheit in jedem Arbeitszyklus jeweils von der identischen Ausgangsposition bis zur identischen Endposition und wieder zurück verfährt. Dies ist speziell bei der Ausbildung von sich periodisch wiederholenden identischen Formteilen der Fall.

In einer alternativen Ausgestaltung variiert zwischen zwei aufeinander folgenden Arbeitszyklen die Ausgangs- und/oder die Endposition oder es werden während eines Arbeitszyklus Zwischenpositionen angefahren. Es sind daher in einer alternativen Ausgestaltung mehrere Arbeits- und/oder Endpositionen oder Zwischenpositionen ausgebildet. Dabei sind zweckdienlicherweise lediglich eine begrenzte Anzahl von unterschiedlichen Arbeits- und/oder Endpositionen vorgesehen, beispielsweise maximal drei unterschiedliche Arbeitspositionen und/oder drei unterschiedliche Endpositionen. Unterschiedliche Arbeits- und/oder Endpositionen werden insbesondere dann vorgesehen, wenn unterschiedliche Formteile, die sich beispielsweise im Hinblick auf ihre Größe oder auch Formgebung unterscheiden, vorgesehen sind. Alternativ sind unterschiedliche Ausgangs- und Endpositionen auch bei unterschiedlichen Abständen zwischen zwei aufeinander folgenden Formteilen vorgesehen.

Allgemein werden mithilfe des hier beschriebenen Verfahrens periodisch wiederkehrende Strukturen erzeugt. Dabei ist ein Gesamt-Arbeitszyklus vorgesehen, welcher sich vorzugsweise in mehrere Arbeitszyklen unterteilen lässt, wobei mehrere Gesamt-Arbeitszyklen aufeinander folgen und während eines Gesamt-Arbeitszyklus eine identische Abfolge von vorzugsweise mehreren Formteilen erfolgt, die insbesondere auch unterschiedlich ausgebildet sein können.

Mit einem Gesamtzyklus wird beispielsweise ein definiertes Kabelteilstück gefertigt und der gesamt gefertigte Kabelstrang wird jeweils nach einem derartigen Kabelstück getrennt und gegebenenfalls mit Steckern etc. vorkonfektioniert. Ein derartiges Kabelteilstück bildet später eine definierte Länge für einen Kabelsatz aus.

Der Abstand zwischen einer jeweiligen Anfangsposition und der Endposition definiert insgesamt einen Verfahrweg (in einer Richtung) für die Formeinheit. Dieser Abstand liegt dabei vorzugsweise lediglich in einem Bereich von 0,5m bis 5m und insbesondere in einem Bereich von 1m bis 2m.

Grundsätzlich ist neben der Linearbewegung in bzw. entgegen der Förderrichtung noch zusätzlich eine Zustellbewegung in Richtung zum bzw. vom Stranggut weg erforderlich. Diese Zustellung erfolgt dabei vorzugsweise exakt senkrecht zur Förderrichtung. Für diese Zustellbewegung ist neben dem (Linear-)Antrieb für die Linearbewegung in/entgegen der Förderrichtung ein zusätzlicher Zustellantrieb ausgebildet. Die Gesamtbewegung der Formeinheit erfolgt daher durch die Überlagerung zweier Bewegungen, insbesondere Linearbewegungen, einerseits in/entgegen der Förderrichtung und andererseits in bzw. entgegen der Zustellrichtung senkrecht zur Förderrichtung.

Ausführungsvarianten der Erfindung werden nachfolgend anhand der Figuren näher erläutert. Diese zeigen teilweise in vereinfachten Darstellungen:
- Fig. 1: ein Stranggut, welches durch eine Extrusionseinheit und eine Vorrichtung zur Ausbildung von Formteilen hindurchgeführt wird,
- Fig. 2: eine vergrößerte ausschnittsweise Darstellung im Bereich der Vorrichtung mit einer Formeinheit,
- Fig. 3: eine beispielhafte Seitendarstellung eines Kabels mit angeformten Formteilen,
- Fig. 4A: ein Geschwindigkeit-Zeit-Diagramm (v-t-Diagramm) für einen Arbeitszyklus der Formeinheit,
- Fig. 4B: ein zur Fig. 4A zugehöriges Geschwindigkeit-Wegdiagramm (v-s-Diagramm),
- Fig. 5: ein vereinfachtes Geschwindigkeit-Zeit-Diagramm mit einer dritten Achse für die Zustellbewegung mit Zustellgeschwindigkeit,
- Fig. 6A bis 6D: verschiedene Geschwindigkeit-Zeit-Diagramme zur Illustration von unterschiedlichen Arbeitszyklen,
- Fig. 7: eine beispielhafte Darstellung einer Vorrichtung mit der linear verfahrbaren Formeinheit.

In den Figuren sind gleich wirkende Teile mit den gleichen Bezugszeichen dargestellt.

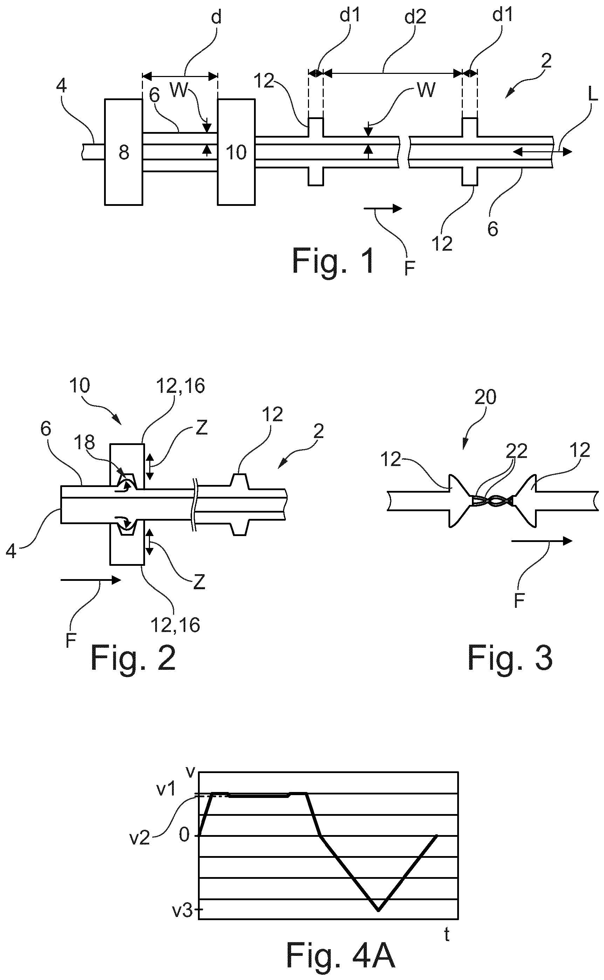

Grundlegende Schritte des Verfahrens zur Herstellung eines Strangguts 2 mittels Anstauen von Material werden zunächst anhand der Fig. 1 erläutert. Diese zeigt im Längsschnitt das sich in einer Längsrichtung L erstreckende Stranggut 2, welches eine innenliegende Seele 4 und einen auf diese aufgebrachten Mantel 6 umfasst. Das Stranggut 2 ist hier als Kabel ausgebildet, mit einer Seele, die entsprechend eine Kabelseele ist und beispielsweise einen oder mehrere Leiter, Adern, Leitungen und/oder Teilkabel aufweist. Alternativ ist das Stranggut 2 ein Schlauch und die Seele 4 dann entsprechend eine Schlauchseele. In dem hier gezeigten Ausführungsbeispiel ist der Mantel 6 insbesondere ein Außenmantel des Strangguts 2. Das Stranggut 2 kann als Halbzeug ausgebildet sein und noch weiter verarbeitet werden. Zum Aufbringen des Mantels 6 wird die Seele 4 zunächst in einer Förderrichtung F einer Extrusionseinheit 8 zugeführt. Mittels dieser wird ein vorgegebenes Material, üblicherweise ein Kunststoff, als Mantel 6 auf die Seele 4 aufextrudiert.

In Förderrichtung F ist der Extrusionseinheit 8 eine Vorrichtung 10 zur Formgebung von Formteilen 12 nachgeschaltet. Die Extrusionseinheit 8 und die Vorrichtung 10 sind Teil einer Produktionslinie, durch die das Stranggut mit einer Liniengeschwindigkeit geführt wird. Die Liniengeschwindigkeit, insbesondere die Extrusionsgeschwindigkeit, und ein Abstand d der Formeinheit 10 zur Extrusionseinheit 8 sind derart gewählt, dass das Material des Mantels 6 noch formbar ist, wenn dieses die Vorrichtung 10 erreicht. Mittels dieser Vorrichtung 10 wird zumindest ein Teil des Materials des Mantels 6 angestaut und zur Ausbildung des Formteils 12 verwendet. Dabei wird das Formteil 12 direkt aus dem Material Mantels 6 des Strangguts 2 ausgeformt. Es wird daher Material des Mantels quasi vom zunächst fertig gestellten Mantel 6 abgeschabt und zur Formgebung des Formteils angestaut.

In Fig. 1 ist exemplarisch ein als zylinderförmige Verdickung des Mantels 6 ausgeführtes Formteil 12 gezeigt. Dieses ist zudem lediglich auf einem bestimmten Formteilabschnitt d1 des Strangguts 2 ausgebildet, an welchen sich Stranggutabschnitte d2 mit im Wesentlichen gleichmäßiger Wandstärke W des Mantels 6 anschließen. In dem hier gezeigten Ausführungsbeispiel sind zudem mehrere Formteile 12 an periodisch wiederkehrenden Längenpositionen ausgebildet, sodass sich zwischen zwei in Längsrichtung L aufeinander folgenden Formteilen 12 ein von der Formeinheit 10 insbesondere unbeeinflusster Stranggutabschnitt Ad mit einer bestimmten Länge erstreckt. Zur Ausbildung der Formteile umfasst die Vorrichtung 10 eine Formeinheit 14, wie sie beispielhaft in Fig. 2 näher dargestellt ist.

Die Formeinheit 14 ist insbesondere mehrteilig ausgebildet und umfasst insbesondere zwei Formhälften, die als Formnester 16 bezeichnet werden. Die beiden Formnester 16 werden vorzugsweise synchron zueinander bewegt. Insgesamt wird die Formeinheit 14 linear in Förderrichtung F sowie senkrecht hierzu in einer Zustellrichtung Z, insbesondere senkrecht zur Förderrichtung F bewegt und dadurch zum Mantel 6 zugestellt. Hierbei fährt das jeweilige Formnest 16 vorzugsweise lediglich teilweise in den Mantel 6 ein und die Formeinheit 10 wird quasi geschlossen. Aufgrund einer unterschiedlichen Geschwindigkeit zwischen der Formeinheit 14 und dem Stranggut 2 erfolgt ein Abschaben und Aufstauen von Mantelmaterial, welches in einer Formkammer 18 der Formeinheit 14 gesammelt wird, sodass diese mit dem Material vorzugsweise vollständig angefüllt wird. Anschließend wird die Formeinheit durch Zurückstellen der Formnester 16 wieder geöffnet, sodass ein Formteil 12 mit einer definierten Kontur entsprechend der Vorgabe der Formkammer 18 ausgebildet wird.

Die in der Fig. 2 dargestellte Formeinheit 12 wird bei Varianten eingesetzt, bei denen die Geschwindigkeit des Strangguts 2 in Förderrichtung F schneller ist als die Geschwindigkeit der Formeinheit 14, sodass also ein rückwärtiges Anstauen erfolgt. Grundsätzlich besteht allerdings auch die Möglichkeit, die Formeinheit 14 mit höherer Geschwindigkeit als das Stranggut 2 in Förderrichtung F zu verfahren, sodass sich ein vorderseitiges Aufstauen, auch als Aufschieben bezeichnet, ergibt. Grundsätzlich lässt sich mit der in der Fig. 2 dargestellten Formeinheit bei einer spiegelbildlichen Ausgestaltung bzw. Drehung auch ein aufgeschobenes Formteil 12 erzeugen.

Anhand der Fig. 3 ist eine Variante eines Kabels 20 als Stranggut 2 dargestellt, bei dem zwei Formteile 12 nach Art von Tüllen ausgebildet sind, die beispielsweise einen trapezförmigen Querschnitt aufweisen. Zwischen den beiden Formteilen 12 liegen bei dieser Ausführungsvariante einzelne Adern 22 des Kabels 20 frei. Bei dieser Variante wird daher speziell nicht nur ein Teil des Mantels 6 abgeschabt, sondern vielmehr das komplette Mantelmaterial wird aufgestaut. Wie zu erkennen ist werden die Formteile spiegelbildlich bezüglich einer Ebene, die senkrecht zur Förderrichtung F ausgebildet ist, gefertigt. Das auf der rechten Seite dargestellte Formteil 12 wird dabei durch ein Aufschieben und das auf der linken Bildhälfte dargestellte Formteil 12 durch ein rückwärtiges Aufstauen hergestellt.

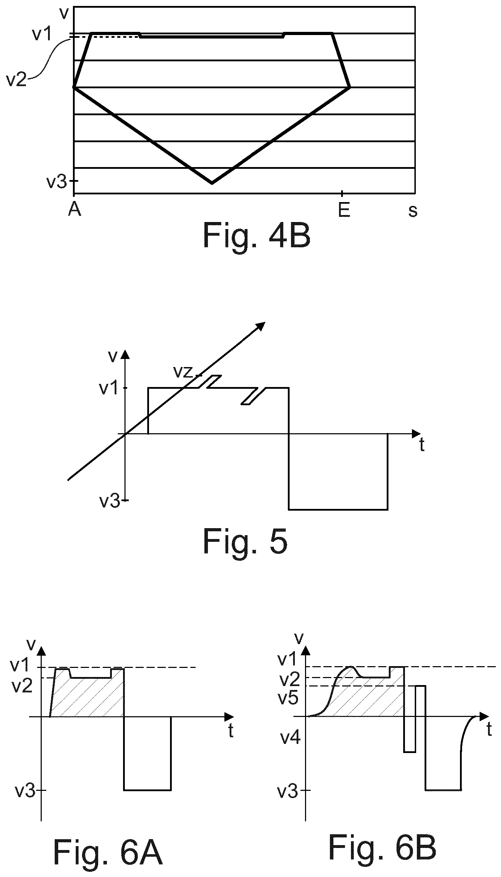

Zur Herstellung der Formteile 12 wird die Formeinheit 14 oder auch mehrere Formeinheiten 14 gemäß einem vorgegebenen Arbeitszyklus verfahren. Dabei werden insbesondere zwei lineare Verfahrwege überlagert. Zum einen wird die Formeinheit 14 in und entgegen der Förderrichtung F linear verfahren. Ergänzend wird die Formeinheit 14, insbesondere die Formnester 16, senkrecht hierzu in bzw. entgegen der Zustellrichtung Z verfahren. Der jeweilige Arbeitszyklus wird nachfolgend zunächst anhand der Fig. 4A,4B näher erläutert.

Zu Beginn des Arbeitszyklusses an einer Ausgangsposition A weist die Formeinheit 14 zunächst die Geschwindigkeit null auf. Aus dieser wird sie vorzugsweise mit der maximal möglichen Beschleunigung in einem ersten Schritt auf eine Geschwindigkeit v1 beschleunigt, welche insbesondere die Liniengeschwindigkeit ist, mit der das Stranggut 2 in Förderrichtung F gefördert wird. Diese liegt im Ausführungsbeispiel bei 2 m/s. In einem zweiten Schritt wird die Geschwindigkeit v1 gehalten. In dieser Zeit erfolgt eine Zustellbewegung in Richtung zum Stranggut 12 hin, sodass die Formnester 16 zumindest teilweise in das Mantelmaterial eingreifen. Anschließend erfolgt ein weiteres Beschleunigen der Formeinheit 14, im Ausführungsbeispiel ein Abbremsen, ebenfalls vorzugsweise mit der maximalen negativen Beschleunigung, sodass eine Form-Geschwindigkeit v2 erhalten wird, die zu der Liniengeschwindigkeit v1 unterschiedlich ist. Die Differenz beträgt beispielsweise 0,05 m/s bis 0,2 m/s. Aufgrund dieser Differenz erfolgt die Füllung der Formkammern 18 mit Mantelmaterial. Bei der Ausführungsvariante der Fig. 4A,4B wird daher für eine gewisse Zeitdauer die Form-Geschwindigkeit v2 gehalten, bis die Formkammer 18 vorzugsweise vollständig gefüllt ist. Dieser Schritt wird auch als Formgebungsprozess bezeichnet.

Nach Abschluss des Formgebungsprozesses erfolgt eine weitere Beschleunigung, in diesem Fall eine positive Beschleunigung, wiederrum vorzugsweise mit maximaler positiver Beschleunigung auf eine Entformungs-Geschwindigkeit, und zwar vorzugsweise wieder auf die Liniengeschwindigkeit v1, die dann für den Entformungsvorgang gehalten wird. Während des Entformungsvorgangs erfolgt das Öffnen der Formnester 16 entgegen der Zustellrichtung Z. Sobald die Formeinheit 14 vollständig geöffnet ist, erfolgt in einem weiteren Schritt wiederum ein Beschleunigen, nämlich ein Abbremsen der Formeinheit 14 auf Null und Beschleunigen auf eine negative insbesondere maximale Rückfahrgeschwindigkeit v3. Diese ist vorzugsweise größer als die Liniengeschwindigkeit, insbesondere um den Faktor 1,5 bis 2. Dabei können während des Abbremsprozesses unterschiedliche Beschleunigungswerte eingenommen werden. Das Abbremsen auf Null erfolgt vorzugsweise wiederrum mit der maximal möglichen negativen Beschleunigung. Das anschließende Beschleunigen auf die Rückfahrgeschwindigkeit erfolgt beispielsweise mit einer etwas geringeren negativen Beschleunigung. Die Rückfahrgeschwindigkeit v3 ist im Vergleich zu der Liniengeschwindigkeit v1 negativ, das heißt die Formeinheit 14 wird wieder in Richtung zur Ausgangsposition A zurück verfahren. Bei Erreichen der Geschwindigkeit null erreicht die Formeinheit 14 eine Endposition E des Arbeitszyklus als maximale Position in Förderrichtung F. Aus der Rückfahrgeschwindigkeit v3 wird die Formeinheit 10 wieder abgebremst bis auf die Geschwindigkeit null. An diesem Punkt ist die Ausgangsposition A wieder erreicht. Die Ausgangsposition A und die Endposition E weisen zueinander einen Abstand a von beispielsweise 1-3 m auf.

Die maximale positive sowie negative Beschleunigung sind vorzugsweise gleich. Die maximalen Beschleunigungswerte liegen vorzugsweise im Bereich von 20 bis 50 m/s² oder auch bis 100 m/s² und insbesondere bei 40 m/s².

Anschließend beginnt der Arbeitszyklus wieder von neuem.

In Fig. 5 ist anhand eines vereinfachten Geschwindigkeits-Zeit-Diagramms ergänzend noch auf einer weiteren Achse die Zustellgeschwindigkeit vz der zweiten Linearbewegung in Zustellrichtung Z bzw. entgegen der Zustellrichtung Z beim Einfahren der Formnester 16 bzw. beim Öffnen der Formnester 16 dargestellt. In beiden Fällen wird das jeweilige Formnest 16 dabei mit möglichst maximaler Beschleunigung senkrecht zur Förderrichtung F verfahren und wird zum Erreichen der eingefahrenen Position abgebremst und verharrt in dieser Position. Umgekehrt, also beim Herausfahren, verharrt das Formnest in der zurückgezogenen Position.

Im Zusammenhang mit den Fig. 6A bis 6D sind unterschiedliche Geschwindigkeit-Zeit-Diagramme dargestellt. Fig. 6A zeigt einen Verfahrzyklus zumindest bis zum Ausbilden des Formteils 12 ähnlich zu dem in der Fig. 4A dargestellten Geschwindigkeitsprofil. Das Abbremsen erfolgt hierbei bis zur Rückfahrgeschwindigkeit v3, die dann für eine gewisse Zeitdauer gehalten wird. In den Fig. 6A bis 6C sind die Beschleunigungen teilweise als senkrechte Linien eingezeichnet. Dies ist eine idealisierte Darstellung und soll lediglich eine maximale Beschleunigung angeben.

Bei der Ausführungsvariante der Fig. 6B ist eine Situation dargestellt, bei der beispielsweise die Beschleunigung im ersten Schritt auf die Liniengeschwindigkeit v1 entlang einer vorgegebenen Kurve verläuft. Auch können die Beschleunigungen zum Erreichen der Form-Geschwindigkeit v2 variieren.

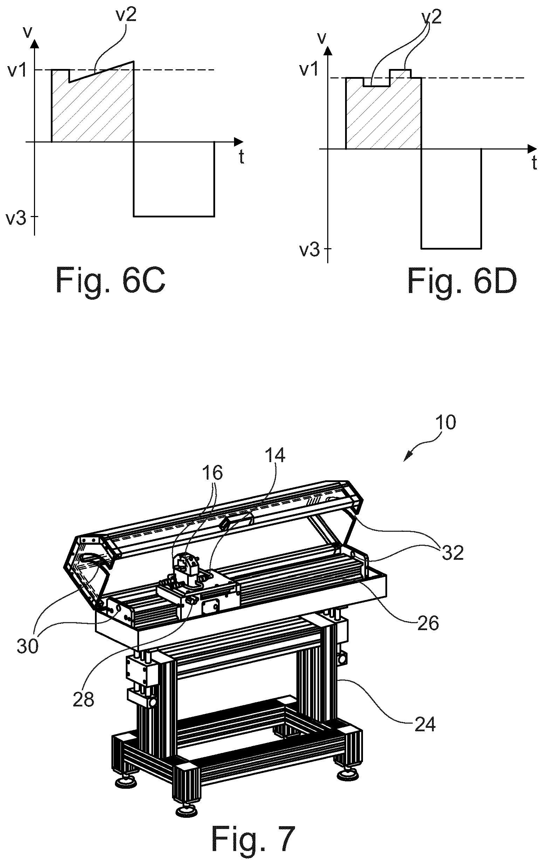

Hervorzuheben ist, dass Fig. 6 eine Variante eines Gesamtzyklusses zeigt, welcher sich aus zwei übereinander gelagerten Teilzyklen zusammensetzt. Und zwar wird nach dem Ausbilden des ersten Formteils 12 die Formeinheit 14 zwar abgebremst bis auf eine negative Geschwindigkeit v4 und ein Stück relativ zum Stranggut 2 zurück verfahren, jedoch nicht bis zur ursprünglichen Ausgangsposition sondern vielmehr zu einer zweiten Ausgangsposition für die Formeinheit 10. Aus dieser erfolgt dann wieder ein positives Beschleunigen bis auf eine positive Geschwindigkeit v5, die geringer ist als die Form-Geschwindigkeit v2.

Diesem zusätzlichen Schritt kann eine weitere Zustellbewegung überlagert sein, sodass beispielsweise ein zusätzliches Formteil 12, beispielsweise ein im Vergleich zu dem ersten Formteil 12 verkleinertes Formteil 12 ausgebildet wird. Erst anschließend erfolgt durch nochmaliges Abbremsen ein Rückführen bis zu der ursprünglichen Ausgangsposition A. Insgesamt ist die Summe der Flächen oberhalb der Null-Geschwindigkeit und unterhalb der Null-Geschwindigkeit identisch.

Bei den Ausführungsvarianten der Fig. 6C, 6D sind zwei Situationen dargestellt, bei denen während des Formgebungsprozesses eine variable Form-Geschwindigkeit v2 bzw. unterschiedliche, aber konstante Form-Geschwindigkeiten v2 eingenommen werden. Bei der Ausführungsvariante der Fig. 6C ist beispielsweise nach dem Abbremsen auf eine minimale Form-Geschwindigkeit v2 eine kontinuierliche, insbesondere lineare Zunahme dieser Form-Geschwindigkeit v2 vorgesehen. Speziell erfolgt eine Zunahme bis zu einer Geschwindigkeit größer als die Liniengeschwindigkeit v1. Mit dieser Maßnahme kann daher mit der zugestellten Formeinheit 12 sowohl ein rückwärtiges Anstauen als auch ein frontseitiges Aufschieben erzielt werden.

Zweckdienlicherweise erfolgt zunächst ein frontseitiges Anschieben und anschließend ein rückseitiges Anstauen. Anders als in der Fig. 6C dargestellt, wird hierbei zunächst eine Form-Geschwindigkeit v2 oberhalb der Liniengeschwindigkeit v1 eingestellt, welche nachfolgend reduziert wird.

In Fig. 6D ist eine ähnliche Situation dargestellt, jedoch wird hier die Form-Geschwindigkeit v2 nicht kontinuierlich variiert. Vielmehr sind ein erster Teilabschnitt 34 mit einer Form-Geschwindigkeiten v2 unterhalb sowie ein zweiter Teilabschnitt 36 mit einer Form-Geschwindigkeiten v2 oberhalb der Liniengeschwindigkeit v1 vorgesehen.

Auch hiermit lässt sich ein Aufstauen sowie Aufschieben zur Ausbildung von zwei voneinander in Förderrichtung F getrennten Formteilen 12 erzielen, beispielsweise das in Fig. 2 dargestellte Kabel 20. Bevorzugt wird - entgegen der Darstellung der Fig. 6D - dabei zunächst durch die hohe Form-Geschwindigkeit v2 ein frontseitiges Aufschieben und nachfolgend durch die geringere Form-Geschwindigkeit v2 ein rückseitiges Aufstauen die beiden in Fig. 2 erkennbaren Formteile 12 erzeugt.

Insgesamt sind mit einem derartigen Verfahrkonzept im Rahmen eines Arbeitszyklusses mit speziell zwei übereinander gelagerten Linearbewegungen unterschiedlichste Geschwindigkeits- und damit Verfahrprofile ermöglicht, sodass auch unterschiedliche Formteile 12 ausgebildet werden können.

In Fig. 7 ist beispielhaft eine Variante der Vorrichtung 10 dargestellt. Die gesamte Vorrichtung 10 weist dabei eine Länge L auf, welche lediglich etwas größer als der Abstand a zwischen der Ausgangsposition A und der Endposition E ist. Beispielsweise ist die Länge L lediglich um 10% bis 30% größer als der Abstand a. Die Vorrichtung 10 weist im Ausführungsbeispiel ein Traggestell 24 auf, welches vorzugsweise ortsfest mit einem Boden verbunden ist. Auf diesem Traggestell 24 ist eine Linearführung 26 angeordnet. Auf dieser Linearführung 26 ist ein Schlitten 28 verschieblich in Förderrichtung F angeordnet. Der Schlitten 28 lässt sich dabei zwischen der Ausgangsposition A und der Endposition E verfahren. Auf dem Schlitten 28 ist die Formeinheit 14 angeordnet, die also mit dem Schlitten 28 verfahren wird.

In nicht näher dargestellter Weise ist zum Verfahren des Schlittens 28 entlang der Linearführung 26 ein Antrieb, insbesondere ein Linearantrieb, speziell ein elektromotorischer Linearantrieb vorgesehen. Ergänzend ist ein hier nicht näher dargestellter Zustell-Antrieb vorgesehen, welcher für die Zustellbewegung der beiden Formnester 16 in Zustellrichtung Z sorgt.

Die gesamte Vorrichtung 10 weist weiterhin eine Eingangsöffnung 30 sowie eine Ausgangsöffnung 32 auf, durch die das Stranggut 2 in die Vorrichtung 10 eingeführt bzw. aus dieser wieder herausgeführt wird.

Die Vorrichtung 10 wird insgesamt - wie in Fig. 1 angedeutet - innerhalb einer Produktionslinie zur Herstellung des Strangguts 2 integriert. Die Formteile 12 werden daher im Rahmen eines Inline-Prozesses an einem quasi endlosen Stranggut 12 kontinuierlich in periodisch wiederkehrenden Abständen ausgebildet.

## Patentansprüche

1. Verfahren zur Herstellung eines Strangguts mit einem Mantel, bei dem mittels einer Extrusionseinheit der Mantel mit einer vorgegebenen Wandstärke extrudiert wird, wobei in einer Förderrichtung nachfolgend zur Extrusionseinheit ein Teil des noch formbaren Materials mit Hilfe einer Formeinheit während eines Formgebungsprozesses angestaut wird, so dass sich am Mantel einstückig ein Formteil ausbildet, wobei die Formeinheit gemäß folgendem Arbeitszyklus bewegt wird
- die Formeinheit wird aus einer Ausgangsposition in Förderrichtung beschleunigt,
- die Formeinheit wird in Richtung zum Stranggut zugestellt und das Formteil wird ausgebildet,
- die Formeinheit wird wieder vom Stranggut zurückgefahren,
- die Formeinheit wird abgebremst und aus einer Endposition entgegen der Förderrichtung zurück in Richtung zur Ausgangsposition verfahren,
wobei das Stranggut mit einer vorgegebenen Liniengeschwindigkeit in Förderrichtung gefördert wird und die Formeinheit während des Formgebungsprozesses mit einer von der Liniengeschwindigkeit verschiedenen Form-Geschwindigkeit verfahren wird, **dadurch gekennzeichnet, dass** das Formteil direkt aus dem Material
des Mantels ausgeformt wird, indem Material des Mantels vom zunächst fertig gestellten Mantel abgeschabt und zur Formgebung des Formteils angestaut wird, wobei die Formeinheit linear entlang einer Linearführung zwischen einer Ausgangsposition und einer Endposition verfahren wird.

2. Verfahren nach Anspruch 1, bei dem die Formeinheit mit Hilfe eines Linearantriebes zwischen der Ausgangsposition und der Endposition verfahren wird.

3. Verfahren nach Anspruch 1 oder 2, bei dem die Liniengeschwindigkeit im Bereich von 0,1 m/s bis 4 m/s und insbesondere bei 2 m/s liegt.

4. Verfahren nach einem der vorhergehenden Ansprüche, bei dem die Formeinheit zunächst auf die Liniengeschwindigkeit beschleunigt, dann in Richtung zum Stranggut zugestellt und danach auf die Form-Geschwindigkeit gebracht wird.

5. Verfahren nach einem der vorhergehenden Ansprüche, bei dem die Form-Geschwindigkeit eine Differenz zur Liniengeschwindigkeit im Bereich von 0,01 m/s bis zu 0,3 m/s aufweist.

6. Verfahren nach einem der vorhergehenden Ansprüche, bei dem die Form-Geschwindigkeit während des Formgebungsprozesses konstant ist

7. Verfahren nach einem der Ansprüche 1 bis 5, bei dem die Form-Geschwindigkeit während des Formgebungsprozesses variiert.

8. Verfahren nach einem der vorhergehenden Ansprüche, bei dem während des Formgebungsprozesses die Form-Geschwindigkeit in einem ersten Teilabschnitt höher und in einem zweiten Teilabschnitt geringer ist als die Liniengeschwindigkeit.

9. Verfahren nach einem der vorhergehenden Ansprüche, bei dem die Formeinheit nach der Ausbildung des Formteils aus der Form-Geschwindigkeit auf eine Entformungs-Geschwindigkeit gebracht wird, die insbesondere die Liniengeschwindigkeit ist, bevor die Formeinheit von dem Stranggut zurückgezogen wird.

10. Verfahren nach einem der vorhergehenden Ansprüche, bei dem die Ausgangs- und Endposition über mehrere Arbeitszyklen identisch sind.

11. Verfahren nach einem der Ansprüche 1 bis 9, bei dem mehrere Arbeits- und / oder Endpositionen vorgesehen sind, insbesondere um unterschiedliche Formteile auszubilden.

12. Verfahren nach einem der vorhergehenden Ansprüche, bei dem ein Abstand zwischen der Anfangsposition und der Endposition im Bereich von 0,5 bis 5 m und insbesondere im Bereich von 1 m - 2 m liegt.

13. Verfahren nach einem der vorhergehenden Ansprüche, bei dem die Zustellung in Richtung zum Stranggut und wieder zurück senkrecht zur Förderrichtung erfolgt.

14. Vorrichtung eingerichtet zur Herstellung eines Formteils an einem Stranggut mittels eines Verfahrens nach einem der vorhergehenden Ansprüche, mit
- einer Linearführung für eine Formeinheit, um diese zwischen der Ausgangsposition und der Endposition zu verfahren,
- einem Antrieb, insbesondere Linearantrieb zum Beschleunigen der Formeinheit,
**dadurch gekennzeichnet, dass**
die Vorrichtung dazu eingereichtet ist, die Formeinheit gemäß folgendem Arbeitszyklus linear entlang einer Linearführung zwischen einer Ausgangsposition und einer Endpositionzu bewegen
- die Formeinheit wird aus der Ausgangsposition in Förderrichtung beschleunigt,
- die Formeinheit wird in Richtung zum Stranggut zugestellt und das Formteil wird ausgebildet,
- die Formeinheit wird wieder vom Stranggut zurückgefahren,
- die Formeinheit wird abgebremst und aus einer Endposition entgegen der Förderrichtung zurück in Richtung zur Ausgangsposition verfahren,
wobei das Stranggut mit einer vorgegebenen Liniengeschwindigkeit in Förderrichtung gefördert wird und die Formeinheit während des Formgebungsprozesses mit einer von der Liniengeschwindigkeit verschiedenen Form-Geschwindigkeit verfahren wird, wobei das Formteil direkt aus dem Material des Mantels ausgeformt wird, indem Material des Mantels vom zunächst fertig gestellten Mantel abgeschabt und zur Formgebung des Formteils angestaut wird.

15. Vorrichtung nach Anspruch 14, die zusätzlich einen Zustellantrieb für eine Zustellung der Formeinheit in einer Richtung senkrecht zur Förderrichtung aufweist.

## Claims

1. Method for producing an extrudate with a sheath, in which method, by means of an extruder unit, the sheath is extruded with a predefined wall thickness, wherein, downstream of the extruder unit in a conveying direction, part of the still malleable material is accumulated with the aid of a mould unit during a shaping process in such a way that an integral moulding is formed on the sheath, wherein the mould unit is moved according to the following operating cycle,
- the mould unit is accelerated from an initial position in the conveying direction,
- the mould unit is actuated in the direction towards the extrudate, and the moulding is formed,
- the mould unit is retracted from the extrudate,
- the mould unit is decelerated and displaced from a terminal position, counter to the conveying direction, back in the direction towards the initial position,
wherein the extrudate is conveyed in the conveying direction at a predefined linear speed, and the mould unit during the shaping process is displaced at a mould speed different from the linear speed, **characterized in that** the moulding is moulded directly from the material of the sheath **in that** the material of the sheath is scraped from the initially completed sheath and is accumulated for shaping the moulding, wherein the mould unit is displaced linearly along a linear guide between an initial position and a terminal position.

2. Method according to Claim 1, in which the mould unit is displaced between the initial position and the terminal position with the aid of a linear drive.

3. Method according to Claim 1 or 2, in which the linear speed is in the range from 0.1 m/s to 4 m/s, and is in particular 2 m/s.

4. Method according to one of the preceding claims, in which the mould unit is initially accelerated to the linear speed, then actuated in the direction towards the extrudate, and thereafter brought to the mould speed.

5. Method according to one of the preceding claims, in which the mould speed differs from the linear speed in the range from 0.01 m/s to 0.3 m/s.

6. Method according to one of the preceding claims, in which the mould speed is constant during the shaping process.

7. Method according to one of Claims 1 to 5, in which the mould speed varies during the shaping process.

8. Method according to one of the preceding claims, in which during the shaping process the mould speed in a first sub-portion is higher, and in a second sub-portion is lower, than the linear speed.

9. Method according to one of the preceding claims, in which the mould unit upon forming the moulding is brought from the mould speed to a demoulding speed, the latter being in particular the linear speed, before the mould unit is retracted from the extrudate.

10. Method according to one of the preceding claims, in which the initial position and the terminal position are identical over a plurality of operating cycles.

11. Method according to one of Claims 1 to 9, in which a plurality of operating and/or terminal positions are provided, in particular so as to form different mouldings.

12. Method according to one of the preceding claims, in which a spacing between the initial position and the terminal position is in the range from 0.5 to 5 m, and in particular in the range from 1 m to 2 m.

13. Method according to one of the preceding claims, in which the actuation in the direction towards the extrudate and back from the latter is performed perpendicularly to the conveying direction.

14. Device configured for producing a moulding on an extrudate by means of a method according to one of the preceding claims, having
- a linear guide for a mould unit so as to displace the latter between the initial position and the terminal position,
- a drive, in particular a linear drive, for accelerating the mould unit,
**characterized in that** the device is configured to move the mould unit linearly along a linear guide between an initial position and a terminal position according to the following operating cycle,
- the mould unit is accelerated from the initial position in the conveying direction,
- the mould unit is actuated in the direction towards the extrudate, and the moulding is formed,
- the mould unit is retracted from the extrudate,
- the mould unit is decelerated and displaced from a terminal position, counter to the conveying direction, back in the direction towards the initial position,
wherein the extrudate is conveyed in the conveying direction at a predefined linear speed, and the mould unit during the shaping process is displaced at a mould speed different from the linear speed, wherein the moulding is moulded directly from the material of the sheath **in that** the material of the sheath is scraped from the initially completed sheath and is accumulated for shaping the moulding.

15. Device according to Claim 14, additionally having an actuating drive for actuating the mould unit in a direction perpendicular to the conveying direction.

## Revendications

1. Procédé de fabrication d'un produit extrudé avec une enveloppe, dans lequel l'enveloppe est extrudée avec une épaisseur de paroi prédéfinie au moyen d'une unité d'extrusion, une partie du matériau encore malléable étant accumulée dans une direction de transport en aval de l'unité d'extrusion à l'aide d'une unité de moulage pendant un processus de façonnage, de telle sorte qu'une pièce moulée se forme d'un seul tenant sur l'enveloppe, l'unité de moulage étant déplacée selon le cycle de travail suivant
- l'unité de moulage est accélérée dans la direction de transport à partir d'une position initiale,
- l'unité de moulage est avancée en direction du produit extrudé et la pièce moulée est formée,
- l'unité de moulage est à nouveau retirée du produit extrudé,
- l'unité de moulage est freinée et ramenée d'une position finale en direction de la position initiale, à l'encontre de la direction de transport,
le produit extrudé étant transporté dans la direction de transport à une vitesse linéaire prédéfinie et l'unité de moulage étant déplacée pendant le processus de façonnage à une vitesse de moulage différente de la vitesse linéaire, **caractérisé en ce que** la pièce moulée est formée directement à partir du matériau de l'enveloppe en raclant le matériau de l'enveloppe de l'enveloppe initialement terminée et en l'accumulant pour façonner la pièce moulée, l'unité de moulage étant déplacée linéairement le long d'un guide linéaire entre une position initiale et une position finale.

2. Procédé selon la revendication 1, dans lequel l'unité de moulage est déplacée entre la position initiale et la position finale à l'aide d'un entraînement linéaire.

3. Procédé selon la revendication 1 ou 2, dans lequel la vitesse linéaire se situe dans la plage de 0,1 m/s à 4 m/s, et notamment de 2 m/s.

4. Procédé selon l'une quelconque des revendications précédentes, dans lequel l'unité de moulage est d'abord accélérée jusqu'à la vitesse linéaire, puis avancée en direction du produit extrudé, puis amenée à la vitesse de moulage.

5. Procédé selon l'une quelconque des revendications précédentes, dans lequel la vitesse de moulage présente une différence avec la vitesse linéaire dans la plage de 0,01 m/s à 0,3 m/s.

6. Procédé selon l'une quelconque des revendications précédentes, dans lequel la vitesse de moulage est constante pendant le processus de façonnage.

7. Procédé selon l'une quelconque des revendications 1 à 5, dans lequel la vitesse de moulage varie pendant le processus de façonnage.

8. Procédé selon l'une quelconque des revendications précédentes, dans lequel, pendant le processus de façonnage, la vitesse de moulage est supérieure à la vitesse linéaire dans une première section partielle et inférieure dans une deuxième section partielle.

9. Procédé selon l'une quelconque des revendications précédentes, dans lequel, après la formation de la pièce moulée, l'unité de moulage est amenée de la vitesse de moulage à une vitesse de démoulage, qui est notamment la vitesse linéaire, avant que l'unité de moulage ne soit retirée du produit extrudé.

10. Procédé selon l'une quelconque des revendications précédentes, dans lequel les positions initiale et finale sont identiques sur plusieurs cycles de travail.

11. Procédé selon l'une quelconque des revendications 1 à 9, dans lequel plusieurs positions de travail et/ou positions finales sont prévues, notamment pour former différentes pièces moulées.

12. Procédé selon l'une quelconque des revendications précédentes, dans lequel une distance entre la position initiale et la position finale se situe dans la plage de 0,5 à 5 m, et notamment dans la plage de 1 m à 2 m.

13. Procédé selon l'une quelconque des revendications précédentes, dans lequel l'avance dans la direction du produit extrudé et en retour s'effectue perpendiculairement à la direction de transport.

14. Dispositif adapté pour la fabrication d'une pièce moulée sur un produit extrudé au moyen d'un procédé selon l'une quelconque des revendications précédentes, avec
- un guide linéaire pour une unité de moulage afin de déplacer celle-ci entre la position initiale et la position finale,
- un entraînement, notamment un entraînement linéaire pour accélérer l'unité de moulage,
**caractérisé en ce que** le dispositif est adapté pour déplacer l'unité de moulage de manière linéaire le long d'un guide linéaire entre une position initiale et une position finale selon le cycle de travail suivant
- l'unité de moulage est accélérée dans la direction de transport à partir de la position initiale,
- l'unité de moulage est avancée en direction du produit extrudé et la pièce moulée est formée,
- l'unité de moulage est à nouveau retirée du produit extrudé,
- l'unité de moulage est freinée et ramenée d'une position finale en direction de la position initiale, à l'encontre de la direction de transport,
le produit extrudé étant transporté dans la direction de transport à une vitesse linéaire prédéterminée et l'unité de moulage étant déplacée pendant le processus de façonnage à une vitesse de moulage différente de la vitesse linéaire, la pièce moulée étant formée directement à partir du matériau de l'enveloppe en raclant le matériau de l'enveloppe de l'enveloppe initialement terminée et en l'accumulant pour façonner la pièce moulée.

15. Dispositif selon la revendication 14, qui présente en outre un entraînement d'avance pour une avance de l'unité de moulage dans une direction perpendiculaire à la direction de transport.
